# EUROPÄISCHE PATENTANMELDUNG

(11) **EP 4 080 344 A1**
(43) Veröffentlichungstag der Anmeldung: **26.10.2022**
(21) Anmeldenummer: 22168559.7
(22) Anmeldetag: 14.04.2022
(51) Int. Cl.: G06F 3/12, G06Q 10/08

(54) **VERFAHREN UND VORRICHTUNG ZUR VERARBEITUNG EINES KOMMISSIONIERAUFTRAGS**

(30) Priorität: 16.04.2021 DE 102021002003
(71) Anmelder: COT Computer OEM Trading GmbH, 64807 Dieburg (DE)
(72) Erfinder: Schäfer, Peter, 64295 Darmstadt (DE)
(74) Vertreter: Patentanwälte Bernhardt / Wolff Partnerschaft mbB

(57) **Zusammenfassung**

Die Erfindung betrifft ein Verfahren zur Verarbeitung eines Kommissionierauftrags, bei dem der Kommissionierauftrag in Form eines digitalen Druckauftrags empfangen wird und aus dem Druckauftrag digital eine Ausgabedatei erzeugt wird, die eine grafische Wiedergabe des Kommissionierauftrags auf einem Display (5) eines Wiedergabegeräts (4) ermöglicht, und die Ausgabedatei automatisch auf das Wiedergabegerät (4) übertragen wird. Zweckmäßigerweise wird der Druckauftrag in einer Druckersprache, insbesondere einer Seitenbeschreibungssprache oder einer Printer Control Language, abgefasst und die Ausgabedatei ist eine Bilddatei.

Die Erfindung betrifft ferner eine Vorrichtung zur Verarbeitung eines Kommissionierauftrags.

## Beschreibung

Die Erfindung betrifft Verfahren und eine Vorrichtung zur Verarbeitung eines Kommissionierauftrags.

Herkömmlicherweise werden Kommissionieraufträge mittels eines Computers angelegt, mittels eines Druckers auf Papier ausgedruckt und die Ausdrucke anschließend zur Bearbeitung verteilt. Diese Vorgehensweise ist nicht nur aufwendig und kostenintensiv, sondern verursacht auch viel Abfall.

Der Erfindung liegt die Aufgabe zugrunde, ein Verfahren der eingangs genannten Art zu schaffen, das sich einfach in typischerweise bestehende Arbeitsabläufe und -umgebungen im Bereich der Kommissionierung integrieren lässt und eine günstigere Verarbeitung von Kommissionieraufträgen ermöglicht.

Erfindungsgemäß wird diese Aufgabe dadurch gelöst, dass der Kommissionierauftrag in Form eines digitalen Druckauftrags empfangen wird, aus dem Druckauftrag digital eine Ausgabedatei erzeugt wird, die eine grafische Wiedergabe des Kommissionierauftrags auf einem Display eines Wiedergabegeräts ermöglicht, und die Ausgabedatei automatisch auf das Wiedergabegerät übertragen wird.

Da der Druckauftrag, mittels dessen herkömmlicherweise der Drucker betätigt und ein Ausdruck des Kommissionierauftrags auf Papier erzeugt wird, zur Durchführung des Verfahrens direkt verwendet werden kann, lässt sich das erfindungsgemäße Verfahren besonders gut in bereits bestehende Kommissionierungsabläufe integrieren.

Anstatt der Ausgabe des Kommissionierauftrags auf Papier, wird der Druckauftrag, der vorzugsweise in einer Druckersprache, insbesondere einer Seitenbeschreibungssprache (Page Description Languages, PDL) oder einer Printer Control Language, abgefasst wird, digital umgewandelt und zur Darstellung an das Wiedergabegerät übertragen. Der Kommissionierauftrag kann mittels des Wiedergabegeräts dargestellt und im Rahmen der Kommissionierung bearbeitet werden.

In einer Ausgestaltung der Erfindung wird der Druckauftrag von einem Auftragsausgaberechner, mittels dessen der Kommissionierauftrag erstellt wird, ausgegeben. Die Ausgabedatei kann durch eine Datenverarbeitungseinheit, die vorzugsweise mit dem Auftragsausgaberechner verbunden ist, erzeugt werden. Die Datenverarbeitungseinheit und der Auftragsausgaberechner sind vorzugsweise über einer Netzwerkverbindung miteinander verbunden.

Zweckmäßigerweise wird als die Ausgabedatei eine Bilddatei, z.B. im Format TIFF, PNG, JPG, GIF oder dergleichen, erzeugt. Die Ausgabedatei könnte ferner in einem anderen Dateiformat zu erzeugen, das besonders bevorzugt mittels eines Wiedergabegeräts lesbar ist, das ein E-Paper-Display aufweist.

In einer weiteren Ausgestaltung der Erfindung wird die Ausgabedatei erzeugt derart, dass sich der Kommissionierauftrag in einer Form grafisch wiedergeben lässt, die an ein Display des Wiedergabegeräts, insbesondere Displayform, -auflösung und/odergröße, angepasst ist, insbesondere an ein Verhältnis von Höhe zu Breite des, bevorzugt rechteckigen, Displays. Zweckmäßigerweise wird die Ausgabedatei erzeugt derart, dass sie bei vollständiger Darstellung des Kommissionierauftrags das Display grafisch vollständig ausfüllt.

Zweckmäßigerweise werden für unterschiedliche Wiedergabegeräte unterschiedliche Ausgabedateien erzeugt werden derart, dass sich der Kommissionierauftrag in einer Form grafisch wiedergeben lässt, die an das jeweilige Display des Wiedergabegeräts, das zur Wiedergabe der jeweiligen Ausgabedatei vorgesehen ist, insbesondere dessen Displayform, -auflösung und/oder-größe, angepasst ist.

In einer Ausführungsform der Erfindung wird die Ausgabedatei in einer Datenbank gespeichert und zur Übertragung an das Wiedergabegerät von der Datenbank abgerufen. Zweckmäßiger werden in der Datenbank mehrere der Ausgabedateien gespeichert, wobei vorzugsweise eine Reihenfolge, in welcher die Ausgabedateien auf Abruf übertragen werden, vorgesehen ist.

In einer Ausgestaltung der Erfindung wird die Ausgabedatei auf Empfang einer digitalen Anforderungsinformation hin auf das Wiedergabegerät übertragen.

In der bevorzugten Ausführungsform der Erfindung wird die Anforderungsinformation dadurch erzeugt, dass mittels eines, vorzugsweise mobilen, Datenerfassungsgeräts, bspw. eines Scanners oder eines Barcodelesegeräts, insbesondere Hand- oder Handrückenscanners bzw. Hand- oder Handrückenbarcodelesegeräts, ein maschinenlesbarer Code eingelesen wird, der das Wiedergabegerät kennzeichnet. Das Datenerfassungsgerät ist zweckmäßigerweise zur Datenübertragung mit dem Auftragsausgaberechner, der Datenverarbeitungseinheit und/oder der Datenbank verbunden.

Der Code kann für eine besonders einfache Handhabung an dem Wiedergabegerät oder in einer Arbeitsumgebung, in der die Kommissionierung durchgeführt wird, angeordnet sein. Die Anforderungsinformation könnte alternativ mittels des Wiedergabegeräts erzeugt und versendet werden. Der Code kann beispielsweise mittels eines Aufklebers an dem Wiedergabegerät und/oder der Arbeitsumgebung angebracht sein oder in das Wiedergabegerät eingraviert sein.

Zweckmäßigerweise werden mittels des Datenerfassungsgeräts ferner maschinenlesbare Codes zur Kennzeichnung von Produkten, die im Zuge der Kommissionierung zusammengestellt werden, eingelesen.

Die genannte erfindungsgemäße Vorrichtung zur Verarbeitung eines Kommissionierauftrags weist eine Datenverarbeitungseinheit und zumindest ein Wiedergabegerät, besonders bevorzugt mehrere Wiedergabegeräte, auf. Die Datenverarbeitungseinheit ist dazu eingerichtet, aus dem Kommissionierauftrag, der durch einen digitalen Druckauftrag gebildet ist, digital eine Ausgabedatei zu erzeugen, die eine grafische Wiedergabe des Kommissionierauftrags auf dem Display des Wiedergabegeräts ermöglicht. Die Vorrichtung ist zur automatischen Übertragung der Ausgabedatei auf das Wiedergabegerät eingerichtet.

Zweckmäßigerweise umfasst die Vorrichtung zumindest einen Auftragsausgaberechner, der den Kommissionierauftrag ausgibt, sowie eine Vielzahl von Wiedergabegeräten.

Die genannte Ausgabedatei wird zweckmäßigerweise durch eine Datenverarbeitungseinheit erzeugt, die vorzugsweise einen Druckauftragsverarbeitungsrechner umfasst. In einer Ausführungsform der Erfindung wird die genannte Datenbank in der Datenverarbeitungseinheit, vorzugsweise in dem Druckauftragsverarbeitungsrechner, gebildet.

Zweckmäßigerweise ist das Wiedergabegerät ein mobiles elektronisches Endgerät, vorzugsweise ein Tablet-Rechner, ein Smartphone, ein PDA, ein Notebook oder ein E-Book-Reader. Besonders bevorzugt weist das Wiedergabegerät ein E-Paper-Display auf.

Die Erfindung betrifft ferner ein Computerprogrammprodukt, das direkt in den internen Speicher eines digitalen Computers geladen werden kann und Softwareabschnitte umfasst, mit denen die obengenannte Verfahrensschritte ausgeführt werden, wenn das Computerprogrammprodukt auf einem Computer läuft. Darüber hinaus betrifft die Erfindung ein Datenträgersignal, welches das Computerprogrammprodukt überträgt.

Die Erfindung wird nachfolgend anhand von Ausführungsbeispielen und den beiliegenden Zeichnungen, die sich auf die Ausführungsbeispiele beziehen, näher erläutert. Es zeigen:
- Fig. 1: in schematischer Darstellung den Ablauf eines erfindungsgemäßen Verfahrens,
- Fig. 2: in schematischer Darstellung den Ablauf eines weiteren erfindungsgemäßen Verfahrens und
- Fig. 3: in schematischer Darstellung den Ablauf eines weiteren erfindungsgemäßen Verfahrens.

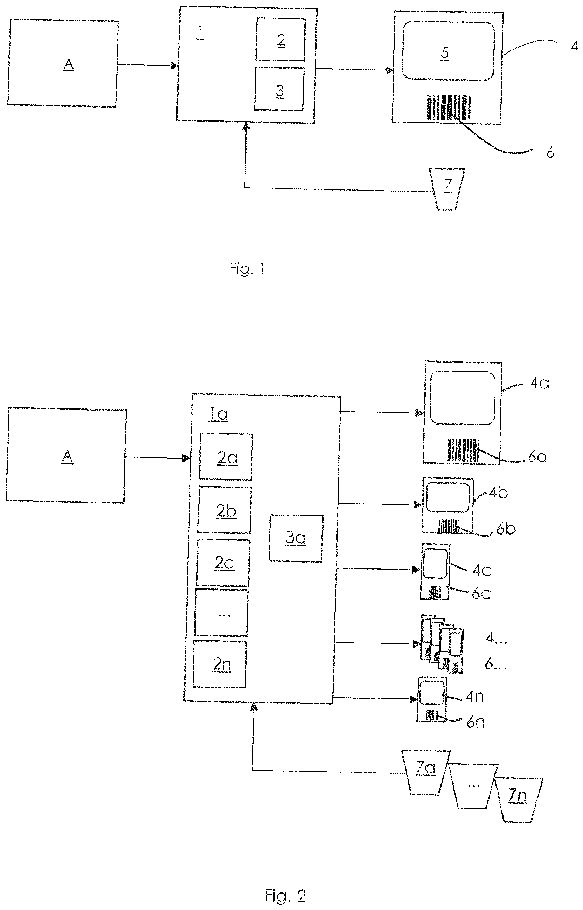

In Fig. 1 ist schematisch eine Datenverarbeitungseinheit 1 dargestellt, die einen Druckdatenverarbeitungsrechner 2 und eine Datenbank 3 umfasst. Zwischen der Datenverarbeitungseinheit 1 und einem Auftragsausgaberechner A sowie zwischen der Datenverarbeitungseinheit 1 und einem Wiedergabegerät 4 besteht jeweilig eine Datenverbindung.

Der Auftragsausgaberechner A ist dazu eingerichtet, Kommissionieraufträge als digitale Druckaufträge zu erzeugen. Die digitalen Druckaufträge, die in einer Druckersprache, insbesondere einer Seitenbeschreibungssprache oder einer Printer control language, abgefasst werden, werden auf die Datenverarbeitungseinheit 1 übertragen, bspw. indem der Auftragsausgaberechner A sie an die Datenverarbeitungseinheit 1 sendet oder sie von der Datenverarbeitungseinheit 1 vom Auftragsausgaberechner A abgerufen werden. Beispiele für geeignete Beschreibungssprachen sind Portable document format (PDF), Postscript (PS), Advanced Function Presentation (AFP) und Device Independent File Format (DVI).

Mit Hilfe des Druckverarbeitungsrechners 2 wird aus dem Druckauftrag eine Bilddatei generiert, die bspw. im Format TIFF, PNG, JPG, GIF oder dergleichen vorgesehen werden kann. Der Druckverarbeitungsrechner 2 bildet einen virtuellen Drucker.

Die Bilddatei kann auf dem Druckauftragsverarbeitungsrechner 2 und/oder in der Datenbank 3 hinterlegt werden. Sie wird anschließend an das Wiedergabegerät 4 gesendet oder durch das Wiedergabegerät 4 abgerufen. Die Bilddatei lässt sich auf einem Displays des Wiedergabegeräts 4 darstellen, das vorzugsweise ein E-Book-Reader ist, aber auch durch einen Tabletrechner, ein Smartphone, ein PDA oder Notebook gebildet sein könnte. Der ursprünglich vom Auftragsausgaberechner A erzeugte Kommissionierauftrag kann dann durch einen Benutzer des Wiedergabegeräts 4 abgearbeitet werden.

Vorgesehen sein kann, dass auf den Wiedergabegerät 4 gleichzeitig mehrere der Bilddateien hinterlegt werden und diese mittels des Displays 5 zur jeweiligen Bearbeitung nacheinander angezeigt werden.

Ferner kann vorgesehen sein, dass die Bilddateien, nachdem die jeweilig damit verknüpften Kommissionieraufträge abgearbeitet worden sind, automatisch von dem Wiedergabegerät 4 gelöscht werden.

Während bei den bekannten Kommissioniersystemen Druckaufträge, die von einem Auftragsausgaberechner ausgegeben worden sind, mittels eines Druckers auf Papier ausgedruckt wurden, werden die Kommissionieraufträge dank der Erfindung auf dem Wiedergabegerät 4 digital angezeigt. Dadurch lassen sich Kosten für Papier und Druck sparen und es wird Abfall vermieden.

Das Wiedergabegerät 4 kann mit einer Software und einem geeigneten Betätigungsmittel versehen sein, mittels derer sich die Bilddatei von der Datenverarbeitungseinheit 1 auf das Wiedergabegerät 4 auf entsprechenden Befehl hin übertragen lässt. In einer besonders bevorzugten Ausführungsform der Erfindung wird die Übertragung der Bilddatei auf das Wiedergabegerät 4 dadurch ausgelöst, dass mittels eines Datenerfassungsgeräts 7, bspw. eines Barcodereaders oder anderen Scanners, ein für den bilddateiabrufvorgesehener Code 6 eingelesen wird. Der Code 6, vorzugsweise ein Barcode oder ein QR-Code, kann direkt an dem Wiedergabegerät 4 oder in einer Arbeitsumgebung, in der die Kommissionieraufträge bearbeitet werden, angeordnet sein. Das Datenerfassungsgerät 7 ist mit der Datenverarbeitungseinheit 1 über eine geeignete Software derart verbunden, dass durch Einlesen des Codes 6 die Übertragung der Bilddatei auf das Wiedergabegerät 4 veranlasst wird. Die Verwendung des Datenerfassungsgeräts 7 zur Auslösung der Datenübertragung erweist sich als besonders vorteilhaft, wenn das Datenerfassungsgerät 5 darüber hinaus zur Erfassung von im Zuge der Kommissionierung bereitgestellten Produkte genutzt wird. Die Übertragung der Bilddatei kann dann für den Benutzer besonders einfach ausgelöst werden.

Das in Fig. 2 dargestellte Verfahren unterscheidet sich von demjenigen nach Fig. 1 dadurch, dass in einer Datenverarbeitungseinheit 1a mittels eines Druckverarbeitungsrechners mehrere unterschiedliche virtuelle Drucker 2a, 2b, 2c,..., 2n gebildet sind, die digitale Druckaufträge in unterschiedlichen grafischen Anordnungen, die für verschiedene Displayformen, -auflösungen und/oder -größen vorgesehen sein können, als Bilddatei ausgeben. Die jeweiligen Bilddateien werden in einer Datenbank 3a gespeichert, wobei eine Reihenfolge vorgesehen wird, in welcher die Bilddateien abgegeben werden, und an verschiedene Wiedergabegeräte 4a, 4b, 4c,...,4n übermittelt. Die jeweiligen Bilddateien werden in der Datenbank 3a derart hinterlegt, dass die jeweilig erzeugten grafischen Anordnungen auf die Wiedergabegeräte 4a, 4b, 4c,...., 4n übertragen werden, für die sie vorgesehen sind und welche die jeweiligen geeignete Displayform aufweisen. Jedes der Wiedergabegeräte 4a, 4b, 4c,..., 4n ist wie oben anhand der Fig. 1 beschrieben mit einem eigenen Code 6a, 6b, 6c,..., 6n versehen, der das jeweilige Wiedergabegerät 4a, 4b, 4c,..., 4n kennzeichnet. Wie oben erläutert wird durch Einlesen des jeweiligen Codes 6a, 6b, 6c,..., 6n mittels eines der Datenerfassungsgeräte 7a,...,7n die Übertragung einer Bilddatei von der Datenbank 3a auf das jeweilige Wiedergabegerät 4a, 4b, 4c,...,4n ausgelöst.

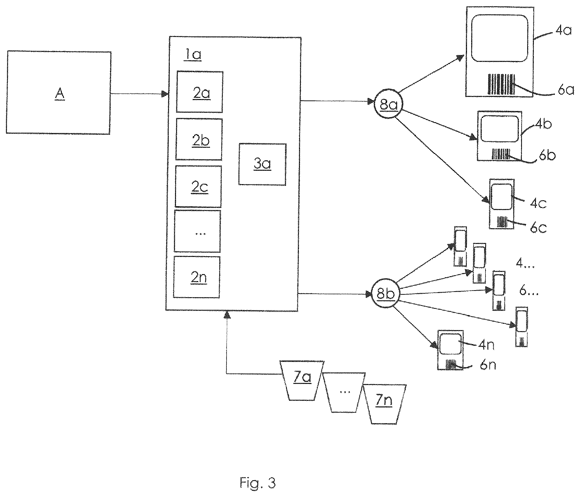

Wie Fig. 3 zu entnehmen ist, können für Übertragung der Daten von der Datenverarbeitungseinheit 1a auf die verschiedenen Wiedergabegeräte 4a, 4b, 4c,..., 4n Transceiver 8a,8b vorgesehen sein, mittels derer die Daten an verschiedenen Orten auf die Wiedergabegeräte 4a, 4b, 4c,..., 4n übertragen werden. Die Datenübertragung kann per Funk oder Licht, insbesondere per IR-Strahlung erfolgen. Vorteilhaft lassen sich dadurch die Daten gezielt räumlich verteilen, ggf. in verschiedenen Räumen oder/und Gebäuden. Es versteht sich, dass eine Vielzahl der Transceiver 8a,8b vorgesehen sein könnte.

Das Wiedergabegerät 4 oder zumindest einzelne der Wiedergabegeräte 4a, 4b, 4c,..., 4n können an Transporteinheiten, bspw. Wagen, Kisten oder dergleichen angeordnet sein, die bei der Kommissionierung verwendet werden.

## Patentansprüche

1. Verfahren zur Verarbeitung eines Kommissionierauftrags, bei dem der Kommissionierauftrag in Form eines digitalen Druckauftrags empfangen wird und aus dem Druckauftrag digital eine Ausgabedatei erzeugt wird, die eine grafische Wiedergabe des Kommissionierauftrags auf einem Display (5) eines Wiedergabegeräts (4) ermöglicht, und die Ausgabedatei automatisch auf das Wiedergabegerät (4) übertragen wird.

2. Verfahren nach Anspruch 1,
**dadurch gekennzeichnet,**
**dass** der digitale Druckauftrag in einer Druckersprache, insbesondere einer Seitenbeschreibungssprache oder einer Printer Control Language, abgefasst wird.

3. Verfahren nach Anspruch 1 oder 2,
**dadurch gekennzeichnet,**
**dass** die Ausgabedatei eine Bilddatei ist.

4. Verfahren nach einem der Ansprüche 1 bis 3,
**dadurch gekennzeichnet,**
**dass** die Ausgabedatei erzeugt wird derart, dass sich der Kommissionierauftrag in einer Form grafisch wiedergeben lässt, die an ein Display (5) des Wiedergabegeräts (4), insbesondere Displayform, -auflösung und/oder-größe, angepasst ist.

5. Verfahren nach einem der Ansprüche 1 bis 4,
**dadurch gekennzeichnet,**
**dass** für unterschiedliche Wiedergabegeräte (4;4a,4b,4c,...,4n) unterschiedliche Ausgabedateien erzeugt werden derart, dass sich der Kommissionierauftrag in einer Form grafisch wiedergeben lässt, die an das jeweilige Display (5) des Wiedergabegeräts (4;4a,4b,4c,...,4n), das zur Wiedergabe der jeweiligen Ausgabedatei vorgesehen ist, insbesondere dessen Displayform, -auflösung und/oder -größe, angepasst ist.

6. Verfahren nach einem der Ansprüche 1 bis 5,
**dadurch gekennzeichnet,**
**dass** die Ausgabedatei in einer Datenbank (3) gespeichert wird und zur Versendung an das Wiedergabegerät (4) von der Datenbank (3) abgerufen wird.

7. Verfahren nach einem der Ansprüche 1 bis 6,
**dadurch gekennzeichnet,**
**dass** die Übermittlung der Ausgabedatei an das Wiedergabegerät (4) mittels eines Datenerfassungsgeräts (7), der mit dem Auftragsausgaberechner (2) verbunden ist, ein Code eingelesen wird, der an dem Wiedergabegerät (4) angeordnet ist.

8. Verfahren nach einem der Ansprüche 1 bis 7,
**dadurch gekennzeichnet,**
**dass** das Verfahren mittels einer Kommissioniervorrichtung durchgeführt wird, die zumindest eine Datenverarbeitungseinheit (1), die die Ausgabedatei erzeugt, sowie zumindest ein Wiedergabegerät (4) aufweist.

9. Vorrichtung zur Verarbeitung eines Kommissionierauftrags, die eine Datenverarbeitungseinheit (1) und zumindest ein Wiedergabegerät (4) aufweist, wobei Datenverarbeitungseinheit (1) dazu eingerichtet ist, aus dem Kommissionierauftrag, der durch einen digitalen Druckauftrag gebildet ist, digital eine Ausgabedatei zu erzeugen, die eine grafische Wiedergabe des Kommissionierauftrags auf einem Display eines Wiedergabegeräts (4) ermöglicht, und die Vorrichtung zur automatischen Übertragung der Ausgabedatei auf das Wiedergabegerät (4) eingerichtet ist.

10. Vorrichtung nach Anspruch 9,
**dadurch gekennzeichnet,**
**dass** die Datenverarbeitungseinheit (1) einen Druckauftragsverarbeitungsrechner (2) zur Erzeugung einer Bilddatei aus dem Druckauftrag und ggf. eine Datenbank (3) zur Speicherung der Bilddatei umfasst.

11. Vorrichtung nach Anspruch 9 oder 10,
**dadurch gekennzeichnet,**
**dass** an dem Wiedergabegerät (4) ein maschinenlesbarer Code (6) angeordnet ist und die Vorrichtung vorgesehen ist derart, dass bei Einlesen des Codes (6), vorzugsweise mittels eines Datenerfassungsgeräts (5), die automatische Übertragung der Ausgabedatei auf das Wiedergabegerät (4) veranlasst wird.

12. Vorrichtung nach einem der Ansprüche 9 bis 11,
**dadurch gekennzeichnet,**
**dass** das Wiedergabegerät (4) ein mobiles Endgerät, vorzugsweise ein Tablet-Rechner, ein Smartphone, ein PDA, ein Notebook oder ein E-Book-Reader ist.

13. Computerprogrammprodukt, das direkt in den internen Speicher eines digitalen Computers geladen werden kann und Softwareabschnitte umfasst, mit den die Verfahrensschritte gemäß der Ansprüche 1 bis 5 ausgeführt werden, wenn das Computerprogrammprodukt auf einem Computer läuft.

14. Datenträgersignal, das das Computerprogrammprodukt nach Anspruch 13 überträgt.
